# EUROPÄISCHE PATENTSCHRIFT

(11) **EP 1 103 186 B1**
(45) Veröffentlichungstag und Bekanntmachung des Hinweises auf die Patenterteilung: **09.08.2006**
(21) Anmeldenummer: 00124314.6
(22) Anmeldetag: 16.11.2000
(51) Int. Cl.: A22C 13/00

(54) **Nahrungsmittelhülle auf Cellulosebasis mit verstärkter Bräthaftung sowie ein Verfahren zu deren Herstellung**
Food casings based on cellulose with better meat adherence, and process for the manufacture thereof
Enveloppes pour saucisses à base de cellulose à adhérence améliorée à la viande, ainsi que leur procédé de fabrication

(30) Priorität: 29.11.1999 DE 19957454
(43) Veröffentlichungstag der Anmeldung: 30.05.2001
(73) Patentinhaber: CaseTech GmbH & Co. KG, 29656 Walsrode (DE)
(72) Erfinder: Blumenberg, Klaus, Dr., 29664 Walsrode (DE); Neuschulz, Willi, 29683 Fallingbostel (DE)
(74) Vertreter: Feldhues, Michael L.F.

(56) Entgegenhaltungen:
- EP-A- 0 047 390
- EP-A- 0 088 308
- DE-A- 3 447 026
- DE-B- 1 492 708
- US-A- 4 463 778

## Beschreibung

Die Erfindung bezieht sich auf eine schlauchförmige Nahrungsmittelhülle, insbesondere Wursthülle, auf Basis von Cellulose mit einer wasserdampfundurchlässigen Schicht auf der Außenseite und einer Beschichtung auf der Innenseite zur Verstärkung der Haftung zum Brät. Ferner auf die Verwendung dieser Wursthüllen und ein Verfahren zu ihrer Herstellung.

Wursthüllen mit einer Beschichtung der Innenseite, welche die Haftung am Brät verstärkt, sind aus der DE-A-2 062 594 bekannt, wobei hier die Verwendung einer Wursthülle mit einer äußeren feuchtigkeitsdichten Schicht aus Vinylidenharz und einem inneren Überzug aus einem Polyaminpolyamid-Epichlorhydrinharz für Würste vom Leberwursttyp beschrieben wird.

In der DE-A-3030036 wird eine schlauchförmige Verpackungshülle beschrieben, die auf der Außenseite einen für Wasserdampf praktisch undurchlässigen Filmüberzug aufweist und bei der der Trägerschlauch auf seiner Innenseite eine an dieser festhaftende haftvermitteldende Schicht aus chemischem Kondensationsprodukt besitzt, das aus Polyaminpolyamid-Epichlohydrinharz besteht.

Bei den oben genannten, ausschließlich mit Polyaminpolyamid-Epichlohydrinharz innenbeschichteten Wursthüllen besteht der Nachteil, daß die Haftung am Brät (Wurst) nicht stark genug ist, um die unerwünschte Abscheidung von Fett oder Gelee zwischen Wursthülle und Wurst sicher zu vermeiden. Das Aufschneiden von Brühwürsten zusammen mit der Wursthülle ist eine Anwendung mit besonders hoher Anforderung an die Haftung der Hülle zur Wurst. Diese Wurstscheiben werden in Klarsichtpackungen im Handel angeboten, wobei die anhaftende Wursthülle den Wurstscheiben ein verkaufsförderndes Erscheinungsbild verleiht. Hier sind die bekannten haftvermittelnden Schichten, die ausschließlich aus Polyaminpolyamid-Epichlohydrinharz bestehen nicht ausreichend haftwirksam und es kommt zum unerwünschten Ablösen der Wursthülle während des Schneidevorganges.

Es bestand daher die Aufgabe, die Innenbeschichtung von Nahrungsmittelhüllen auf Cellulose-Basis so zu verbessern, daß die Haftwirkung zwischen Hülle und Brät spürbar verstärkt wird.

Überraschend wurde gefunden, daß die Kombination von Polyaminpolyamid-Epichlohydrinharz mit einem Wachs in der Innenbeschichtung derartiger Wursthüllen in synergistischer Weise eine starke Haftung an Brät bewirkt, während die Komponenten für sich alleine als Innenbeschichtungen nur geringe Haftung der Hülle an der Wurst bewirken.

Gegenstand der Erfindung ist daher eine Nahrungsmittelhülle auf Basis von Cellulose mit einer wasserdampfunduchlässigen Schicht auf der Außenseite und einem aus wenigstens zwei Komponenten bestehenden Überzug auf der Innenseite, der die Haftung zum Brät verstärkt, dadurch gekennzeichnet, daß die erste Komponente des Überzuges ein vernetztes Polyaminpolyamid-Epichlorhydrinharz, die zweite Komponente ein Wachs und die gegebenenfalls vorhandene dritte Komponente ein synthetisches Polymer ist.

Die Wursthülle besteht aus einem Schlauch aus regenerierter Cellulose, der vorzugsweise mit einem Faservlies aus Hanffasern verstärkt ist. Die Herstellung von Wursthüllen auf Cellulosebasis, die gegebenenfalls faserverstärkt sind und eine wasserdampfundurchlässige Sperrschicht auf der Außenoberfläche aufweisen, erfolgt in an sich bekannter Weise. Dabei wird das Faservlies zum Schlauch geformt, mit Viskose beschichtet, regeneriert, gewaschen, mit Weichmacher behandelt, ein Haftvermittler für den wasserdampfundurchlässigen Filmüberzug aufgebracht, der Cellulose-Regeneratschlauch getrocknet und die wasserdampfundurchlässige Außenschicht aufgebracht. Die erfindungsgemäße Innenausrüstung der Regenerathülle wird vor der Aufbringung der wasserdampfundurchlässigen Sperrschicht durchgeführt, vorzugsweise vor der Trocknung des Regeneratschlauches.

Die Innenausrüstung besteht aus mindestens zwei Komponenten, wobei die erste Komponente ein vernetztes Polyaminpolyamid-Epichlohydrinharz ist.

Diese Verbindungen werden für die Innenbeschichtungen von Wursthüllen bereits eingesetzt und sind gesundheitlich unbedenklich (Empfehlung 44, Kunstdärme, des Bundesinstitutes für gesundheitlichen Verbraucherschutz und Veterinärmedizin). Die vorvernetzten Polyaminpolyamid-Epichlohydrinharze reagieren mit der Celluloseoberfläche thermisch induziert während des Trocknungsprozesses und werden dadurch vollvernetzte, unlösliche Polyaminpolyamid-Epichlorhydrinharze. Von den im Handel erhältlichen Typen kann z.B. ® Kymene SLX , Hersteller Fa. Hercules, eingesetzt werden.

Die zweite Komponente für die Innenbeschichtung ist bevorzugt ein natürliches Wachs aus der Gruppe Carnaubawachs, Montanwachs, Candelillawachs und Bienenwachs. Die Wachse werden bevorzugt als wässrige Dispersionen eingesetzt.

Die Imprägnierlösung zur Innenausrüstung der Regenerathülle enthält 0,5 bis 10, insbesondere 1,5 bis 5 Gew.-% des vorvernetzten Polyaminpolyamid-Epichlohydrinharzes und 0,1 bis 4, insbesondere 0,4 bis 3 Gew-% des Wachses, jeweils bezogen auf die Reinsubstanz.

In weiterer Ausführungsform umfasst der Überzug auf der Innenseite gegebenenfalls eine dritte Komponente, bestehend aus einem Copolymer oder einem Polyvinylalkohol. Das erfindungsgemäß eingesetzte Copolymer ist aus Vinylacetat und Maleinsäureestern aufgebaut. Es wird im Handel z.B. unter der Bezeichnung ® Vinnapas Dispersionen (Wacker-Chemie GmbH) angeboten. Von den alternativen Viskositätsstufen dieses Produktes wird für die erfindungsgemäße Nahrungsmittelhülle bevorzugt der Typ MV 70 H mit einem Feststoffgehalt von 50 Gew.-% eingesetzt.

Der gegebenenfalls als dritte Komponente im Überzug auf der Innenseite der Wursthülle verwendete Polyvinylalkohol ist vorzugsweise ein sogenannter vollhydrolysierter Typ, der durch Verseifung von Polyvinylacetat hergestellt wird. Derartige Produkte sind z.B. unter der Bezeichnung ® Mowiol (Hoechst AG) im Handel erhältlich. Von den bezüglich der Viskosität und des Hydrolysegrades unterschiedlichen Typen wird für die erfindungsgemäße Nahrungsmittelhülle bevorzugt das ® Mowiol 28-99 in Form einer wässrigen Lösung mit einem Feststoffgehalt von 10 Gew.-% eingesetzt. Die Lösung wird hergestellt durch Einstreuen des ® Mowiol Granulates in kaltes Wasser und anschließendem Lösen bei 90°C unter Rühren.

Die Imprägnierlösung zur Innenausrüstung der Regenerathülle kann neben den oben aufgeführten Mengen des vorvernetzten Polyaminpolyamid-Epichlohydrinharzes und des Wachses als dritte Komponente die ® Vinnapas Dispersion oder das ® Mowiol in einer Konzentration von 0,1 bis 4, besonders bevorzugt 0,4 bis 3 Gew.-%, bezogen auf die Reinsubstanz enthalten.

Ein weiterer Gegenstand der Erfindung ist die Verwendung dieser Wursthüllen zur Herstellung von Koch- oder Brühwürsten.

### Beispiele

Die Erfindung wird durch die folgenden Beispiele näher erläutert.

Die Vergleichsbeispiele 1 und 2 zeigen jeweils die Wirkung bei ausschließlicher Verwendung von Polyaminpolyamid-Epichlohydrinharz oder Wachsdispersion in der Imprägnierlösung, während Beispiel 1 den synergistischen Effekt bei kombinierter Anwendung dieser Substanzen belegt.

Die für den zusätzlichen Überzug auf der Innenseite vorgesehenen Wursthüllen waren folgendermaßen hergestellt worden.

Verfahrensüblich wurde eine Hanfvliesbahn in einer dem Nennkaliber entsprechenden Schnittbreite zu einem Schlauch geformt und auf der Innen- und Außenseite mit gegebenenfalls eingefärbter Viskoselösung beschichtet. Der Schlauch passierte dann die üblichen Fäll- Wasch- Weichmacher- und Primerbäder. Vorzugsweise vor dem Eintritt in den Trockenschacht wurde die jeweils in den folgenden Beispielen genannte Imprägnierlösung eingefüllt und über ein Rollenpaar abgequetscht. Anschließend wurde der Schlauch im aufgeblasenen Zustand getrocknet und aufgewickelt. Die Aufbringung der wasserdampfundurchlässigen Sperrschicht auf der Außenseite erfolgt im separaten Prozeß nach üblichen Verfahren. Aus der fertiggestellten Wursthülle wurden Würste vom Brühwursttyp hergestellt und nach 2 Tagen hinsichtlich ihrer Schälbarkeit beurteilt. In einer Skala von 0 bis 5 zunehmender Haftung der Wursthülle an der Wurst erfolgt die Bewertung der Bräthaftung.

### Beispiel 1

Bei der kontinuierlichen Herstellung wurde die Innenoberfläche eines schwarz eingefärbten, beidseitig viskosierten Faserdarms mit Nennkaliber 105 im nassen Zustand mit der Imprägnierlösung nachfolgender Zusammensetzung behandelt.

| | |
|---|---|
| 2580g | Weichwasser |
| 560g | Glyzerin (90 Gew.-%) |
| 320g | Carnaubawachsdispersion (® Michem Lube 160 |
| | PFE, Hersteller Fa. Michelman, 25 Gew.-%) |
| 1540g | Polyaminpolyamid-Epichlohydrinharz (® Kymene SLX, |
| | Hersteller Fa. Hercules, 13 Gew.-%) |

Nach Fertigstellung der Wursthüllen wurden damit Musterwürste mit Brühwurstbrät hergestellt und nach 2 Tagen geschält. Die Hülle zeigte starke Haftung an der Wurst mit einer Bräthaftungsbewertung von 3. Geleeabsatz zwischen Wursthülle und Wurst konnten nicht beobachtet werden. Die Belegung der abgeschälten Wursthüllenfläche mit Brätrasen, d.h. aus der Wurstoberfläche abgelöstes Brät, betrug 100 %.

### Beispiel 2

Bei der kontinuierlichen Herstellung wurde die Innenoberfläche eines schwarz eingefärbten, beidseitig viskosierten Faserdarms mit Nennkaliber 105 im nassen Zustand mit einer Imprägnierlösung der nachfolgenden Zusammensetzung behandelt.

| | |
|---|---|
| 2660g | Weichwasser |
| 560g | Glyzerin (90 Gew.-%) |
| 80g | Copolymerdispersion (® Vinnapas MV 70H, Hersteller Fa. Wacker, 50 Gew.-%) |
| 160g | Carnaubawachsdispersion (® Michem Lube 160 PFE, Hersteller Fa. Michelman, 25 Gew.-%) |
| 1540g | Polyaminpolyamid-Epichlohydrinharz (® Kymene SLX, Hersteller Fa. Hercules, 13 Gew.-%) |

Nach Fertigstellung der Wursthüllen wurden damit Musterwürste mit Brühwurstbrät hergestellt und geschält. Die Hülle zeigte starke Haftung an der Wurst mit einer Bräthaftungsbewertung von 3, die Belegung mit Brätrasen betrug 100 %. Geleeabsatz zwischen Wursthülle und Wurst konnten nicht beobachtet werden.

### Beispiel 3

Bei der kontinuierlichen Herstellung wurde die Innenoberfläche eines schwarz eingefärbten, beidseitig viskosierten Faserdarms mit Nennkaliber 105 im nassen Zustand mit einer Imprägnierlösung der nachfolgenden Zusammensetzung behandelt.

| | |
|---|---|
| 1240g | Weichwasser |
| 560g | Glyzerin (90 Gew.-%) |
| 1500g | Vollhydrolysiertes Polyvinylacetat (® Mowiol 28-99, Hersteller Fa. Hoechst, 10 Gew.-% wässr. Lsg.) |
| 160g | Carnaubawachsdispersion (® Michem Lube 160 PFE, Hersteller Fa. Michelman, 25 Gew.-%) |
| 1540g | Polyaminpolyamid-Epichlohydrinharz (® Kymene SLX, Hersteller Fa. Hercules, 13 Gew.-%) |

Nach Fertigstellung der Wursthüllen wurden damit Musterwürste mit Brühwurstbrät hergestellt und nach verfahrensbedingter Lagerung geschält. Die Hülle zeigte starke Haftung an der Wurst mit einer Bräthaftungsbewertung von 3, die Belegung mit Brätrasen betrug 100 %. Geleeabsatz zwischen Wursthülle und Wurst war nicht vorhanden.

### Vergleichsbeispiel 1

Bei der kontinuierlichen Herstellung wurde die Innenoberfläche eines schwarz eingefärbten, beidseitig viskosierten Faserdarms mit Nennkaliber 105 im nassen Zustand mit einer Imprägnierlösung der nachfolgenden Zusammensetzung behandelt.

| | |
|---|---|
| 2900g | Weichwasser |
| 560g | Glyzerin (90 Gew.-%) |
| 1540g | Polyaminpolyamid-Epichlohydrinharz (® Kymene SLX, Hersteller Fa. Hercules, 13 Gew.-%) |

Nach Fertigstellung der Wursthüllen wurden damit Musterwürste mit Brühwurstbrät hergestellt und nach geschält. Die Hülle zeigte keine Haftung an der Wurst und die Bräthaftung wurde somit mit 0 bewertet. Außerdem zeigte sich starker Geleeabsatz zwischen Wursthülle und Wurst.

### Vergleichsbeispiel 2

Bei der Wursthüllenherstellung wurde die Innenoberfläche eines gold eingefärbten Faserdarms mit Nennkaliber 60 mit folgender Imprägnierlösung behandelt.

| | |
|---|---|
| 4120g | Weichwasser |
| 560g | Glyzerin (90 Gew.-%) |
| 320g | Carnaubawachsdispersion (® Michem Lube 160 PFE, Hersteller Fa. Michelman, 25 Gew.-%) |

Nach Fertigstellung der Wursthüllen wurden wiederum damit Musterwürste mit Brühwurstbrät hergestellt und geschält. Die Hülle zeigte keine Haftung an der Wurst woraus eine Bräthaftungsbewertung von 0 resultierte. Außerdem zeigte sich starker Geleeabsatz zwischen Wursthülle und Wurst.

## Patentansprüche

1. Nahrungsmittelhülle auf Basis von Cellulose mit einer wasserdampfundurchlässigen Schicht auf der Außenseite und einem aus wenigstens zwei Komponenten bestehenden Überzug auf der Innenseite, der die Haftung zum Brät verstärkt, **dadurch gekennzeichnet, daß** die erste Komponente des Überzuges ein vernetztes Polyamidoamin-Epichlorhydrinharz, die zweite Komponente ein Wachs und die gegebenenfalls vorhandene dritte Komponente ein synthetisches Polymer ist.

2. Hülle nach Anspruch 1, **dadurch gekennzeichnet, daß** die zweite Komponente ausgewählt ist aus der Gruppe natürlicher Wachse auf Basis von Montanwachs, Carnaubawachs, Candelillawachs oder Bienenwachs.

3. Hülle nach einem der Ansprüche 1 bis 2, **dadurch gekennzeichnet, daß** der Gewichtsanteil an erster Komponente bis zum 20-fachen, insbesondere bis zum 5-fachen des Gewichtanteils an zweiter Komponente beträgt.

4. Hülle nach einem der Ansprüche 1 bis 3, **dadurch gekennzeichnet, daß** die im Überzug gegebenenfalls eingesetzte dritte Komponente ein Polyvinylalkohol oder ein Copolymer aus Vinylacetat mit Maleinsäureester ist.

5. Hülle nach einem der Ansprüche 3 bis 4, **dadurch gekennzeichnet, daß** der Überzug ein Flächengewicht von 0,05 bis 1,0, vorzugsweise 0,1 bis 0,25 g/m² aufweist.

6. Hülle nach einem der Ansprüche 1 bis 5, **dadurch gekennzeichnet, daß** sie eine Faserverstärkung aufweist.

7. Verfahren zur Herstellung der Wursthülle gemäß Anspruch 1, wobei man den Überzug, der die Haftung zur Wurst verstärkt, auf die innere Oberfläche der Wursthülle aufbringt, **dadurch gekennzeichnet, daß** die wässrige Überzugsmischung 0,5 bis 10 Gew.-% eines Polyaminpolyamid-Epichlorhydrinharzes als erste Komponente und 0,1 bis 4 Gew.-% eines dispergierten Wachses als zweite Komponente sowie gegebenenfalls 0,1 bis 4 Gew.-% Polyvinylalkohol oder eines Copolymeren aus Vinylacetat und Maleinsäureester als dritte Komponente enthält.

8. Verfahren nach Anspruch 7, **dadurch gekennzeichnet, daß** die wässrige Überzugsmischung 1,5 bis 5 Gew.-% eines Polyaminpolyamid-Epichlorhydrinharzes, 0,4 bis 2 Gew.-% eines dispergierten Wachses und gegebenenfalls 0,4 bis 3 Gew.-% Polyvinylalkohol oder eines Copolymeren aus Vinylacetat und Maleinsäureester enthält.

9. Wurstwaren, enthaltend eine Nahrungsmittelhülle gemäß einem der Ansprüche 1 bis 6.

10. Verwendung einer Wursthülle nach einem der Ansprüche 1 bis 6 zur Herstellung von Kochwurst und/oder Brühwurst.

## Claims

1. Foodstuffs skin based on cellulose with a water vapour impermeable layer on the outer surface and a coating consisting of at least two components on the inner surface and enhancing the adhesion to the meat, **characterized in that** the first component of the coating is a crosslinked polyamidoamine-epichlorohydrin resin, the second component is a wax and the optional third component is a synthetic polymer.

2. Skin according to Claim 1, **characterized in that** the second component is selected from the group consisting of natural waxes based on montan wax, carnauba wax, candelilla wax or beeswax.

3. Skin according to Claim 1 or Claim 2, **characterized in that** the weight fraction of the first component is up to 20 times and especially up to 5 times the weight fraction of the second component.

4. Skin according to any one of Claims 1 to 3, **characterized in that** the optional third component in the coating is a polyvinyl alcohol or a copolymer of vinyl acetate with maleic ester.

5. Skin according to Claim 3 or Claim 4, **characterized in that** the coating has a weight per unit area in the range from 0.05 to 1.0 and preferably in the range from 0.1 to 0.25 g/m².

6. Skin according to any one of Claims 1 to 5, **characterized in that** it comprises a fibrous reinforcement.

7. Process for preparing the sausage skin according to Claim 1, wherein the coating which enhances the adhesion to the sausage is applied to the inner surface of the sausage skin, **characterized in that** the aqueous coating composition includes 0.5% to 10% by weight of a polyaminepolyamide-epichlorohydrin resin as first component and 0.1% to 4% by weight of a dispersed wax as second component and also, optionally, 0.1% to 4% by weight of polyvinyl alcohol or of a copolymer of vinyl acetate and maleic ester as third component.

8. Process according to Claim 7, **characterized in that** the aqueous coating composition includes 1.5% to 5% by weight of a polyaminepolyamide-epichlorohydrin resin, 0.4% to 2% by weight of a dispersed wax and optionally 0.4% to 3% by weight of polyvinyl alcohol or of a copolymer of vinyl acetate and maleic ester.

9. Sausage products including a foodstuffs skin according to any one of Claims 1 to 6.

10. Use of a sausage skin according to any one of Claims 1 to 6 for producing sausages to be simmered and/or boiled.

## Revendications

1. Enveloppe pour denrées alimentaires à base de cellulose, comportant, du côté externe, une couche imperméable à la vapeur d'eau et, du côté interne, un revêtement constitué d'au moins deux composants, qui améliore l'adhérence à la viande hachée, **caractérisée en ce que** le premier composant du revêtement est une résine polyamine-polyamide-épichlorhydrine réticulée, le deuxième composant est une cire et le troisième composant, éventuellement présent, est un polymère synthétique.

2. Enveloppe selon la revendication 1, **caractérisée en ce que** le deuxième composant est sélectionné parmi le groupe des cires naturelles à base de cire minérale, de cire de carnauba, de cire de candelilla ou de cire d'abeilles.

3. Enveloppe selon une des revendications 1 ou 2, **caractérisée en ce que** la proportion en poids du premier composant atteint jusqu'à 20 fois, en particulier jusqu'à 5 fois celle du deuxième composant.

4. Enveloppe selon une des revendications 1 à 3, **caractérisée en ce que** le troisième composant mis en oeuvre, le cas échéant, dans le revêtement est un alcool polyvinylique ou un copolymère d'acétate de vinyle avec des esters d'acide maléique.

5. Enveloppe selon une des revendications 1 à 4, **caractérisée en ce que** le revêtement présente une masse au mètre carré de 0,05 à 1,0, de préférence de 0,1 à 0,25 g/m².

6. Enveloppe selon une des revendications 1 à 5, **caractérisée en ce qu'**elle présente un renforcement par fibres.

7. Procédé de fabrication de l'enveloppe pour saucisses selon la revendication 1, dans lequel on applique le revêtement qui renforce l'adhérence à la saucisse sur la surface interne de l'enveloppe pour saucisses, **caractérisé en ce que** le mélange de revêtement aqueux contient 0,5 à 10 % en poids d'une résine polyamine-polyamide-épichlorhydrine comme premier composant et 0,1 à 4 % en poids d'une cire dispersée comme deuxième composant ainsi que, le cas échéant, 0,1 à 4 % en poids d'alcool polyvinylique ou d'un copolymère d'acétate de vinyle et d'esters d'acide maléique comme troisième composant.

8. Procédé selon la revendication 7, **caractérisé en ce que** le mélange de revêtement aqueux contient 1,5 à 5 % en poids d'une résine polyamine-polyamide-épichlorhydrine, 0,4 à 2 % en poids d'une cire dispersée et, le cas échéant, 0,4 à 3 % en poids d'alcool polyvinylique ou d'un copolymère d'acétate de vinyle et d'esters d'acide maléique.

9. Saucisses et saucissons comportant une enveloppe pour denrées alimentaires selon une des revendications 1 à 6.

10. Utilisation d'une enveloppe pour saucisses selon une des revendications 1 à 6 pour la fabrication de saucisses à bouillir et/ou de saucisses à cuire.
